# EUROPEAN PATENT APPLICATION

(11) **EP 2 375 626 A1**
(43) Date of publication of application: **12.10.2011**
(21) Application number: 10250624.3
(22) Date of filing: 29.03.2010
(51) Int. Cl.: H04L 9/08

(54) **Data storage**

(71) Applicant: British Telecommunications public limited company, London EC1A 7AJ (GB)
(72) Inventor: The designation of the inventor has not yet been filed
(74) Representative: Roberts, Simon Christopher

(57) **Abstract**

A storage method comprises receiving datasets (DA, DB) to be stored in a shared storage infrastructure (110) comprising a group of stores (130, 220), generating from each dataset (DA, DB), using a cryptographic threshold secret sharing scheme, a plurality of encrypted data shares (222), whereby a dataset (DA, DB) can be reconstructed from a subset comprising at least a threshold number of the respective shares, and storing the shares of each dataset across a majority of the stores in the group according to an arrangement including, for each dataset, at least one subgroup of stores that store a threshold number of respective shares and fewer than the threshold number of shares of any other dataset.

## Description

### Technical field

The present invention relates to data storage and in particular, but not exclusively, to shared data storage.

### Technical background

It is known to store data belonging to multiple users on a storage system comprising a shared and distributed data storage infrastructure, which typically comprises a plurality of individual, physical storage entities. There are many different kinds of known shared storage systems, which are suitable for providing a shared storage capability, for example using networked file servers, storage arrays, and network attached storage appliances, which may be connected by local and/or remote networks, such as local area networks, wide area networks and the Internet. Such storage systems typically store each user's data securely and privately so that other users cannot access and read the data. While security and privacy may be provided by storing data from each user in a private portion of a disk or in a separate disk of the system, such arrangements are not easily scalable and are not resilient to failures. Therefore, shared virtual storage systems are becoming more prevalent nowadays.

Virtual storage systems employ a so-called virtualisation layer, which provides to each user the appearance of using a private disk or disk space; whereas, in reality, data for each user may be stored in one place or across a few or many distributed storage devices and systems. In practice, data belonging to plural users may be spread across a common set of storage devices and systems.

Additionally, shared storage systems typically employ one or more kinds of redundancy, for example RAID or mirroring, to ensure continuity, whereby, if one storage device containing a user's data (or a portion thereof) fails or becomes inaccessible, the effected data can be recovered from the remaining, accessible and operative storage devices.

### Summary

According to a first aspect, the present invention provides a data storage method comprising: receiving datasets to be stored in a shared storage infrastructure comprising a group of stores; generating from each dataset, using a cryptographic threshold secret sharing scheme, a plurality of encrypted data shares, whereby a dataset can be reconstructed from a subset comprising at least a threshold number of the respective shares; and storing the shares across a majority of the stores in the group according to an arrangement including, for each dataset, at least one subgroup of stores that store a threshold number of respective shares and fewer than the threshold number of shares of any other dataset.

According to a second aspect, the present invention provides a computer program product stored on a data carrier and adapted, when executed in a programmed processor, to operate according to the aforementioned method

According to a third aspect, the present invention provides a storage apparatus, comprising: an input to receive a dataset to be stored on a shared storage infrastructure comprising a group of stores and an output to communicate data to the shared storage infrastructure; a cryptographic processor to generate from each dataset to be stored, using a cryptographic threshold secret sharing scheme, a plurality of encrypted data shares, whereby a dataset can be reconstructed from a subset comprising at least a threshold number of the respective shares; and a storage processor to distribute the shares, via the output, across a majority of the stores in the group according to an arrangement including, for each dataset, there is at least one subgroup of stores that store a threshold number of respective shares and fewer than the threshold number of shares of any other dataset any stored dataset can be reconstructed by providing access to a pre-determined subgroup of the stores, which store a threshold number of shares of the respective dataset and fewer than the threshold number of shares necessary to reconstruct any other dataset.

Other aspects and embodiments of the present invention will become apparent from reading the following description and claims.

### Brief Description of the Drawings

Various features and advantages of the invention will become apparent from the following description of embodiments of the invention, given by way of example only, with reference to the accompanying drawings, of which:
FIG. 1 is a block diagram illustrating a storage system operable according to embodiments of the present invention;
FIG. 2 is a block diagram illustrating two sub-groups of stores storing a number of dataset shares;
FIG. 3 is a block diagram illustrating an arrangement of datasets, and associated shares of the datasets, to be stored in the arrangement of stores that is illustrated in FIG. 4;
FIG. 4 is a block diagram illustrating two groups of stores each storing shares from four datasets;
FIG. 5 is the same as FIG. 4 but illustrates shares as present (clear) or seized (shaded);
FIG. 6 is a block diagram illustrating three groups of stores storing a number of dataset shares;
FIG. 7 is a block diagram illustrating an arrangement of datasets, and associated shares of the datasets, to be stored in the arrangement of stores that is illustrated in FIG. 8;
FIG. 8 illustrates shares as present (clear) or seized (shaded) in an arrangement comprising three sub-groups of stores; and
FIG. 9 is a flow diagram illustrating a storage method according to embodiments of the present invention:

### Detailed Description

Various embodiments of the present invention will now be described in more detail with reference to the accompanying drawings. It will be appreciated that the invention is not limited in its application to the details of method and the arrangement of components as set forth in the following description or illustrated in the drawings. It will be apparent to a person skilled in the art that additional embodiments of the present invention not detailed in the description are possible and will fall within the scope of the present claims. Accordingly, the following description should not be interpreted as limiting in any way, and the scope of protection is defined solely by the claims appended hereto.

As storage moves towards becoming more and more virtualised, the present inventors have appreciated that law enforcement and criminal investigations, which rely on the ability to recover and scrutinise the data of a user who is under investigation, will become more of a challenge. During an investigation, it is a common requirement that physical storage devices containing data belonging to a user who is under investigation must be taken off-line or even seized, to facilitate data analysis while ensuring that the data cannot be compromised or deleted by malicious acts. The present inventors have appreciated that, in a virtual storage environment, wherein the data of a user who is under investigation may be distributed across several (or many) storage entities, each entity would need to be taken off-line, or physically seized, even though the same devices may store portions of data belonging to several (or many) other users. Thus, there is an increased risk that data belonging to innocent users may accidentally become accessible to others, compromising privacy. In addition, data belonging to innocent users, which is stored in storage entities that are seized or taken off-line, may become inaccessible to the innocent users, thereby disrupting continuity.

In the following description, the term "store" is used generally to denote a storage entity, device or apparatus that can be seized by an agency, such as a government authority, for investigation purposes. While the term "seized" typically means a store is 'physically taken away', as used herein seized can also mean that access to the store, and its operation, become exclusively controlled by the agency without being moved, whereby only the agency can access the store, and it cannot be tampered with by a storage network provider (SNP), another user or anyone else: this can be thought of as 'virtual seizure', since the store is not physically moved.

In addition, while embodiments of the invention address concerns over seizure of a store, the effect of a seizure, and the steps described herein for ensuring continuity, apply equally to stores that become inaccessible to a SNP or users for any other reason, for example through device, system or network failure such as might occur through fire, flood or earthquake. As such, all the principles taught herein apply equally to store seizure and to a store being inaccessible for any other reason.

In practice, a store may be any kind of storage entity including, without limitation, a solid state storage device such as a USB key, an optical disk, a hard disk drive or a magnetic tape, a storage array or a network server. In the case of a storage array or server, the entire apparatus can be seized, or only a part (e.g. an individual hard disk drive) thereof. Other than needing to be computer-readable, there is no limitation on the kind of storage that can be employed according to embodiments of the present invention.

Thus, embodiments of the present invention aim to address seizure issues and have the added benefit of improving continuity in the face of hardware and/or system failure.

In general, cryptographic solutions targeted at data storage have been focused on ensuring the integrity and confidentiality of data. Continuity and resilience has typically been provided through use of redundancy, usually employing the storage of multiple copies of the data.

In contrast, embodiments of the present invention employ a cryptographic secret sharing scheme, to imbue stored data with the characteristics of privacy and to assure continuity. Cryptographic secret sharing schemes are known in the context of sharing cryptographic keys. For example, the so-called Shamir threshold secret sharing scheme, which is described in "How to share a secret", A. Shamir, Communications of the ACM 22 (11): 612-613, 1979, describes how to divide data D into n pieces in such a way that D is easily reconstructable from any k pieces, but even complete knowledge of k - 1 pieces reveals absolutely no information about D. Such a scheme is called a (k, n) threshold secret sharing scheme. This technique enables the construction of robust key management schemes for cryptographic systems that can function securely and reliably even when misfortunes destroy half the pieces and security breaches expose all but one of the remaining pieces. Other secret sharing schemes are known, see for example, "Safeguarding cryptographic keys", G. R. Blakely, Proceedings of the National Computer Conference 48: 313-317, 1979.

Embodiments of the present invention will be described with reference to the Shamir scheme for secret sharing. However, unless the contrary is stated, or the context dictates otherwise, embodiments of the present invention are not limited to the application of any particular secret sharing scheme.

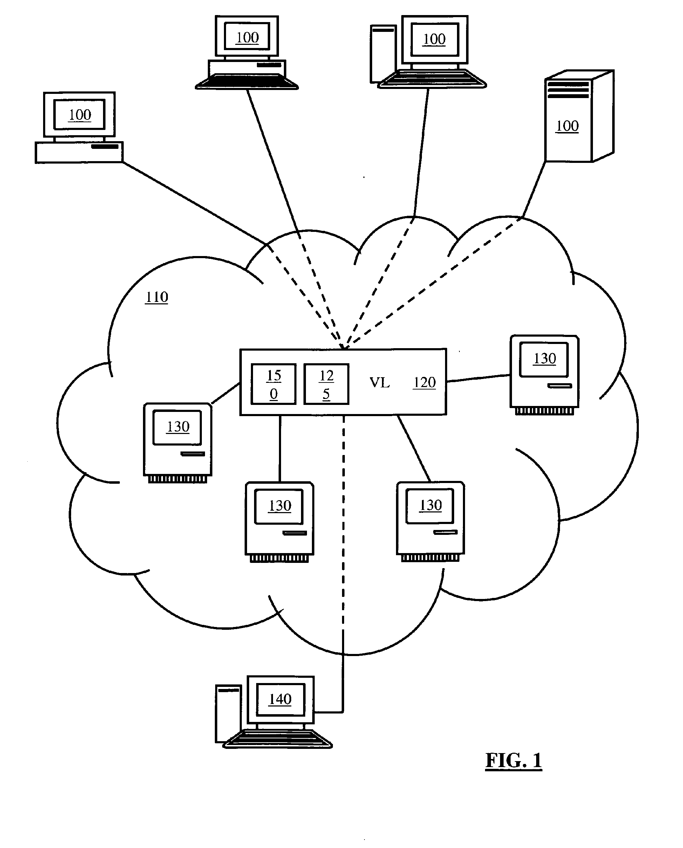

A first exemplary embodiment of the present invention will now be described with reference to the diagram in FIG. 1, which illustrates a storage system suitable for operating in accord with embodiments of the invention. According to FIG. 1, a multiplicity of users 100 are connected to a storage network 110, comprising a distributed storage infrastructure 130 and a virtualisation layer, VL 120, which comprises one or more software programs executing on an appropriate computing platform; for example a computing apparatus operating a Windows™, LINUX™ or UNIX™ operating system. The storage network would typically be provided and/or operated by a SNP. Arrangements of this kind are known: the virtualisation layer 120 provides user access to the storage infrastructure 130. The virtualisation layer 120, very basically, provides a mapping 125, which maps where a user's data is physically stored, on storage devices, to one or more virtual volumes, which are presented to each of the users via an appropriate front end user interface. More specifically the virtualisation layer 120 manages receipt of data from users, the distribution of the data across the storage infrastructure 130, the management of mappings 125 between the distributed data and the respective virtual volumes, receipt of data access requests from users, and the recovery and reconstitution of data from the storage infrastructure to be returned to users based on respective data access requests. Thus, for example, a user 100 typically sees, from the virtualisation layer perspective, that its data is stored in one virtual storage volume (that is, in one virtual place), despite the fact that, physically, the data may be distributed in any one of many different ways across plural physical platforms, for example, in a manner which suits the storage infrastructure. The distributed storage infrastructure 130 can comprise any suitable interconnected arrangement of hardware storage devices and systems.

Also illustrated in FIG. 1 is an agency computer system 140, which may be under the control of a government authority, and which is entitled to seize and investigate user data. As illustrated, the agency 140 may have the authority to access data via the storage network 110 but will typically also have the authority to instruct the SNP to hand over stores that contain data to be investigated.

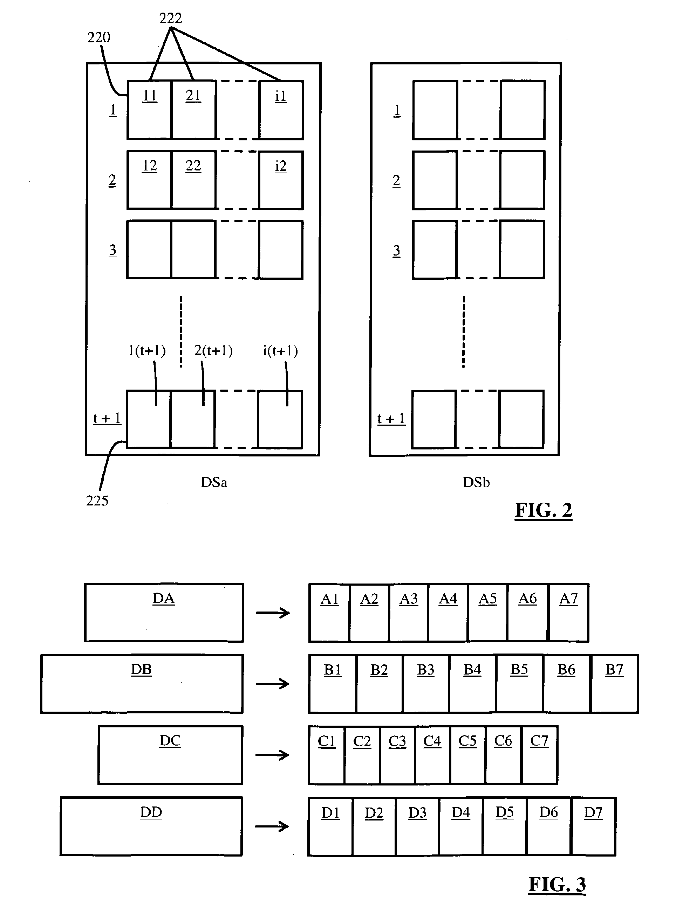

An arrangement of stores, according to an embodiment of the present invention, will now be described with reference to FIG. 2. According to the embodiment, each of the stores (e.g. store 220) is an individual disk drive storage device, in the storage infrastructure 130, which can be taken offline or physically seized. Each store is notionally split into individual portions 222 ― "notionally" because the split is virtual rather than physical - for storing a single share. Although stores herein are illustrated as being the same size, in practice, stores may be many different sizes.

In FIG. 2, a group of 2t + 2 data stores is arranged into two subgroups, each comprising t + 1 data stores. For convenience of description only, the first subgroup of data stores is denoted DSa and the second subgroup of data stores is denoted DSb. In DSa, for example, there are t + 1 stores including a first data store 220, which is identified as 1, having storage areas for users 11 to i1, through to a final data store 225, which is identified as t + 1, having storage areas for users 1(t + 1) to i(t + 1). DSb has the same number of data stores, but with each data store having one fewer storage area (that is, i - 1 storage areas each), for reasons which will become apparent.

According to the present embodiment, up to i = t + 1 datasets can be stored across the group of stores, where each dataset in this embodiment corresponds to the data of one user; whereby there can be up to i users.

In the present context, a "user" can be a single person, a group of people, an organisation or any other entity that has a data storage need. Indeed, a "user" may alternatively or additionally be a computer or a network service (or the like), performing data processing operations of some kind.

A "dataset" in the present context can be any amount of data to be stored. For example, a dataset may comprise a cryptographic key, one or more documents, digital photographs, music files or indeed the entire contents of a computer (or network of computers), for example, that need to be backed-up. There is no limit on how small or large a dataset can be (other than a limit imposed by the physical capacity of the available storage): and there is no limit on the size of a dataset on which a secret sharing scheme can operate.

According to the present embodiment, a cryptographic secret sharing scheme is employed to create 2t + 1 shares for each dataset to be stored, in a (t + 1, 2t + 1) threshold secret sharing scheme. In other words, a dataset can be reconstructed using only t + 1 shares of the original 2t + 1 shares; and the dataset cannot be reconstructed with knowledge of only t shares.

The value of t determines the number of users whose data can be accommodated within a particular group of stores, and is determined by the desired implementation, the kind of users and their respective data storage requirements, etc. No restriction on the value of t is prescribed herein.

For the present purposes, the secret sharing scheme, and the associated generation and reconstruction of datasets, is performed by an additional secret sharing function 150 in the virtualisation layer 120 (that is, software code executing on an appropriate computing platform), which is adapted to perform cryptographic secret sharing operations. Due to the application of virtualisation, users typically do not see the individual stores or shares that are illustrated in FIG. 2. Instead, users continue to see their data stored in a virtual volume. Of course, in other embodiments, the secret sharing operations may be performed in hardware, to increase throughput performance, for example using a cryptographic co-processor or the like. Indeed, the secret sharing operations may be conducted elsewhere, for example on a different computing platform entirely. Embodiments of the present invention are in no way limited to the processing architecture employed for secret sharing.

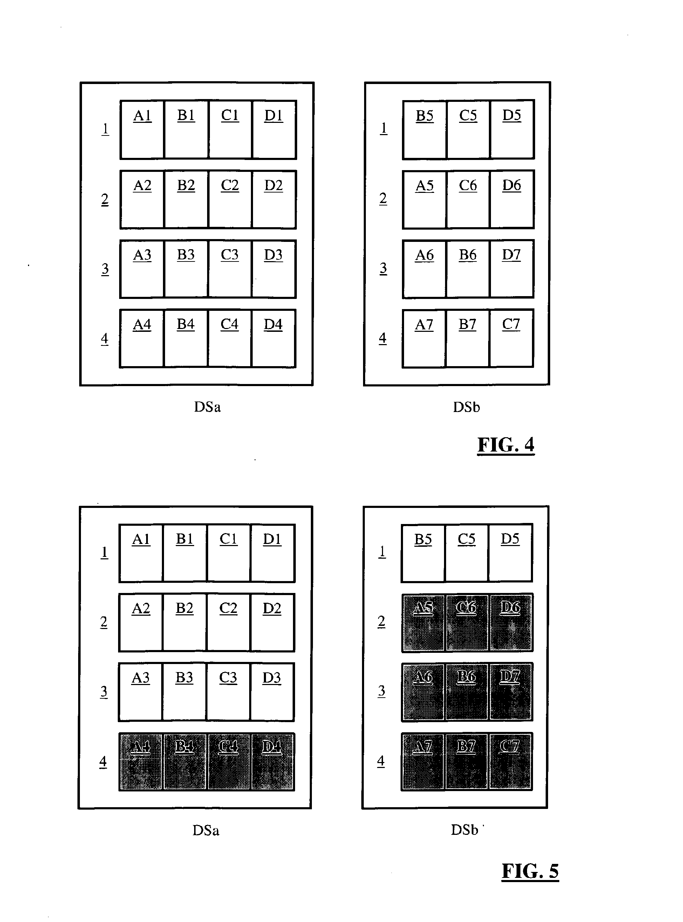

As will now be described by way of a simplified example, which is illustrated in FIG. 3 and FIG. 4, seven shares are generated for each of four datasets: DA, DB, DC, DD and then arranged across a group of stores such that any dataset can be reconstructed by providing access to a pre-determined subgroup of the stores, which store a threshold number of respective shares and fewer than the threshold number of shares necessary to reconstruct any other dataset. For ease of illustration only, in the simplified example, t = 3, and the shares are arranged as illustrated in FIG. 4. Although the shares in FIG. 4 are shown to be of equal sizes, in practice, shares for different datasets will typically be different sizes.

With reference to FIG. 4, each of t + 1 = 4 of the shares of a first dataset DA are stored across the t + 1 = 4 shares of DSa; storing only one share per store and storing each share only once. Accordingly, each store in DSa stores one of the shares of the first dataset. This process is repeated for each dataset to be stored, so that each store stores one share of each dataset. For example, in FIG. 4, the first store in DSa has a first share, A1, of dataset DA, a first share B 1 of dataset DB, a first share C 1 of dataset DC, and a first share D 1 of dataset DD. The second store has shares A2, B2, C2, D2; the third store has shares A3, B3, C3, D3; and the fourth store has shares A4, B4, C4, D4.

The remaining t = 3 shares of the first dataset DA are stored across stores of DSb; storing only one share per store and storing each share only once. Accordingly, all but one of the stores in DSb stores one of the shares of the first dataset. This process is generally repeated for each dataset i to be stored, where 1 ≤ i ≤ t+1, and the ith store of DSb will not store any shares of user i data. This particular way of storing user data is equivalent to a 1 - (t + 1, 1, t) design, ensuring that shares of a particular user i are present in t of the t + 1 data stores of DSb. In other words, when there are t + 1 datasets to be stored, each store in DSb stores a share of all but one (that is, of t) of the datasets. For example, according to FIG. 4, the first store in DSb has shares B5, C5, D5, but not A5; the second store has shares A5, C6, D6, but not B6; the third store has shares A6, B6, D7, but not C7; and the fourth store has shares A7, B7, C7, but not D7.

Overall, therefore, according to the example in FIG. 4, the (t + 1, 2t + 1) threshold secret sharing scheme is a (4, 7) threshold secret sharing scheme, in which any four out of seven shares of a dataset can be used to reconstruct the dataset.

This general arrangement of shares facilitates a beneficial property that any dataset i can be reconstructed by providing access to all but the ith store of DSb and any one store from DSa. During an investigation, for example, the dataset i can be investigated by delivering to the agency 140 all but the ith store of DSb (which does not hold any share of user i) and one store from DSa. In doing so, the agency 140 will be able to reconstruct the dataset i but no other dataset j will be reconstructable in the process.

For user i, i≤1, j≤ t+1 where j≠i, all but one of the t data stores handed to the agency 140 store shares of client j data. More precisely, the jth data store will not hold any of user j data shares - this is achieved due to the design used in the storage of data shares in DSb. From this, t - 1 shares of all user data are obtained from DSb data stores.

Overall, after any seizure, only t shares of client j data will be available to the agency 140. As the data is secret shared such that t + 1 shares are needed to reconstruct the data, the agency 140 cannot reconstruct the original data with the t shares it holds and thus the confidentiality of the client j's data is preserved despite the seizure.

Applying the example in FIG. 4 to the foregoing analysis shows that, to reconstruct dataset DA (comprising shares A1-A7), requires seizure of stores 2 to 4 in DSb (providing the three shares A5, A6 and A7) and any one of the stores from DSa (providing a fourth share being any one of shares A1-A4). Meanwhile, the combination of stores 2 to 4 in DSb only provides two shares of each of the datasets DB, DC and DD, whereby the addition of a store from DSa provides only one additional share of each of the datasets DB, DC and DD, amounting to three shares overall, which is below the threshold of shares required to reconstruct any of the datasets DB, DC and DD.

Moreover, all other users still have access to t + 1 of their shares, by virtue of having t shares from DSa and the remaining ith share from DSb. With reference to FIG. 5, which reproduces FIG. 4, but with shaded stores representing seized stores, it can be seen that each dataset DB, DC and DD still has four shares available for dataset reconstruction, to satisfy the threshold requirement for accessing the respective data. However, DA cannot be reconstructed, as there are only three remaining shares (A1, A2, A3) distributed across the stores.

Thus, according to the present embodiment, continuity is preserved for all other users.

It will be appreciated that the arrangement of shares described thus far enables the storage system to tolerate the seizure of data belonging to one user/dataset. Referring back to FIG. 5, for example, it can be seen that an agency could seize sufficient additional stores to investigate the dataset belonging to any other user. However, should that further seizure occur, all remaining users would no longer be able to access their data.

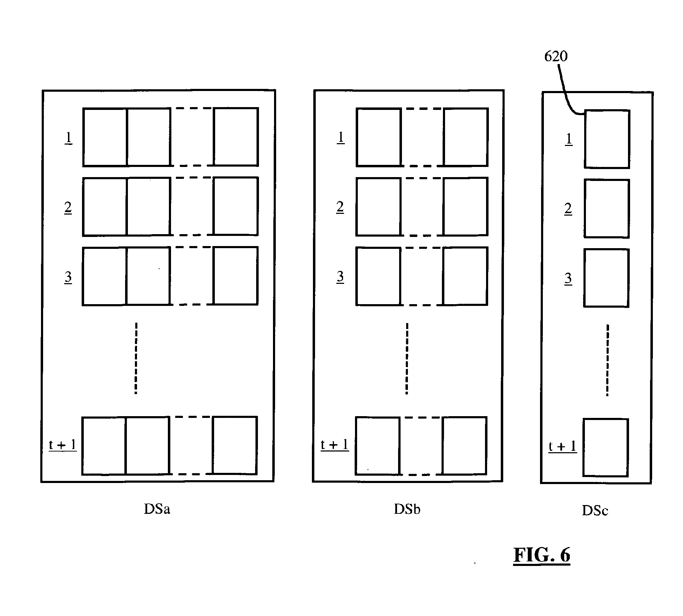

Embodiments of the present invention can be adapted to tolerate multiple seizures, as will now be described with reference to FIG. 6.

According to the embodiment illustrated in FIG. 6, 3t + 3 stores are arranged into three subgroups - DSa, DSb and DSc ― each having t + 1 stores. DSa and DSb are the same as in FIG. 2. DSc is arranged so that each store 620 accommodates one share for each dataset, such that each store stores only one share from each dataset that is stored in the system.

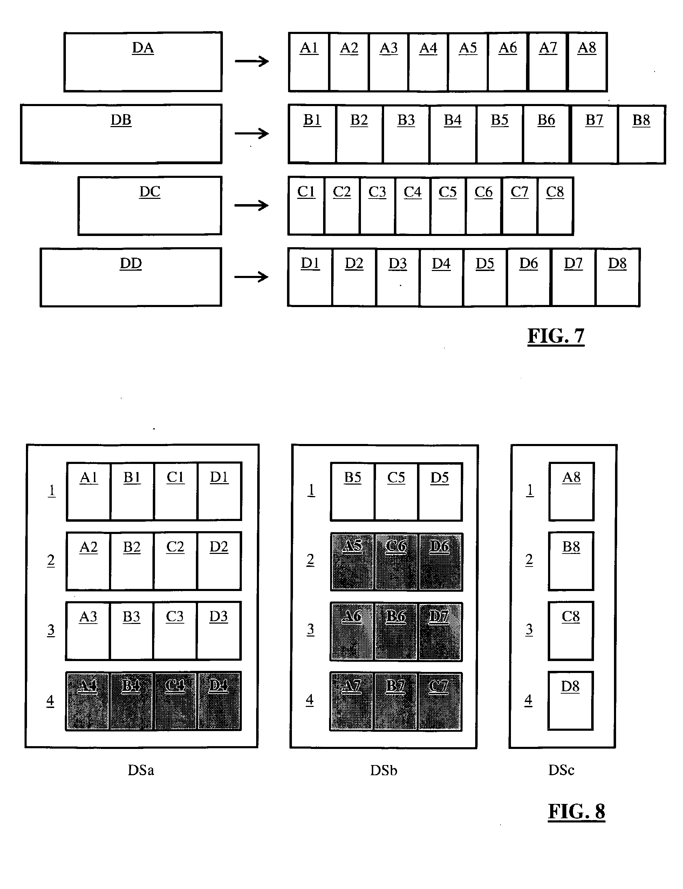

The present embodiment employs a (t + 1, 2t + 2) threshold secret sharing scheme, such that any t + 1 shares can be used to reconstruct a dataset comprising 2t + 2 shares. As illustrated in FIG. 7, extending the example introduced in FIG. 4, it can be seen that each dataset, DA, DB, DC and DD generates eight shares, which are arranged across the three subgroups of stores as illustrated in FIG. 8.

A first seizure of stores is illustrated in FIG. 8 by the shaded stores. This seizure is exactly the same as the one illustrated in FIG. 5. However, the embodiment illustrated in FIG. 8 can tolerate any number of additional seizures, as will now be described.

For example, assume that a second seizure of dataset DB is required; where DA has already been seized. In this instance, it will be apparent (by inspecting the shaded stores) that the authorities already have three shares of DB: an insufficient number of shares to facilitate a reconstruction of DB. However, it will also be apparent that, by handing over store 2 of DSc, containing share B8 of DB, the authority would then have four shares of DB, which would be sufficient for the authority to reconstruct DB. Meanwhile, the remaining users of datasets DC and DD would still have access to a sufficient number of shares to enable respective dataset reconstruction. Moreover, the authority could seize store 3 or store 4 of DSc, respectively containing share C8 or C9 of datasets DC and DD respectively, while still facilitating reconstruction of datasets DC and DD using the remaining stores in DSa and DSb.

More generally, employing the principle illustrated by way of example in FIG. 8, there will always be a minimum of t + 2 shares of any dataset remaining after any other dataset has been seized. The fact that only t+1 shares are needed to recover the data of any dataset/client allows this system to facilitate dataset reconstruction even if one entire share becomes inaccessible due to a system-related failure.

It will be appreciated that the arrangement of stores exemplified by FIG. 2, in combination with the (t + 1, 2t + 1) threshold secret sharing scheme, is an optimal arrangement whereby, for a given number of stores, a maximum number of datasets can be stored, while assuring continuity of access and data secrecy even if the stores necessary to reconstruct and investigate one dataset are seized.

For example, the particular arrangement of stores illustrated in FIGs. 4 and 5 implies that continuity of user access can be assured even if up to 50% of the stores become unavailable (e.g. the shaded stores in FIG. 5). At the same time, storage efficiency - in terms of the number of stores used for each dataset - is 87.5% (that is, 7/8). In practical scenarios, storage efficiency is expected to be greater than 65% and even greater than 95%.

Similarly, the arrangement of stores illustrated in FIG. 6 is an optimal arrangement whereby, for a given number of stores, a maximum number of datasets can be stored, while assuring continuity of access and data secrecy, even if the stores necessary to reconstruct and investigate all datasets are seized.

For example, the particular arrangement in FIG. 8 implies that continuity of user access to all datasets can be assured even if 58% (that is, 7/12 comprising store 4 in DSa, stores 2-4 in DSb and stores 2-4 in DSc, our of twelve stores). Even if, in addition, store 1 in DSc becomes unavailable, all datasets other than DA remain available.

While the arrangements illustrated in FIGs 2 and 6 are optimal arrangements, according to the criteria explained above, embodiments of the invention include other, less optimal arrangements of stores. For example, any arrangement that includes additional stores and shares, thereby increasing redundancy in order to increase the assurance of continuity, are encompassed within the scope of the present invention. For example, another arrangement of stores may be similar to the arrangement in FIG. 6 but include an additional subgroup, say, DSd, which is similar to DSc, having one share of each dataset. This would clearly increase redundancy and, hence, tolerance to store failures. Indeed, another arrangement could comprise 6 sub-groups of stores (say, DSa-DSf), with DSa-DSc being the same as in FIG. 6 and DSd-DSf being the same as DSc in FIG. 6, thereby significantly increasing tolerance to store failures. Another six-sub-group arrangement would comprise two mirrored sets of the FIG. 6 arrangement. Such an arrangement would be extremely tolerant to faults. Ultimately, a designer may opt for any kind of less optimal arrangement whenever continuity is of significant importance.

Indeed, the skilled person responsible for designing a storage system based on the teachings herein would be able to tune the parameters of the system, in terms of the threshold sharing scheme, number of shares per dataset and store arrangement, to achieve many different design requirements. For example, it would be possible to select a threshold secret sharing scheme and storage arrangement so that: any dataset can be recovered from 33.34% of the stores, in the event the other 66.66% of the stores becomes unavailable; access to stores storing up to 99.9% of any one dataset does not provide access to any other dataset; access to up to 66.66% of the stores in the group, in order to reconstruct one dataset, is insufficient to enable the reconstruction of any other dataset. Many other combinations of arrangement are possible.

It will also be appreciated that, according to embodiments of the invention, many different groupings and sub-grouping of stores may be employed without departing from the principles explained herein. Indeed, the concept of a sub-group (e.g. DSa or DSb) is merely a convenient construct used to describe embodiments of the invention in simple terms. An important element of information that needs to be understood by the SNP, is which stores can be seized to reconstruct each dataset (e.g. a first sub-group) and which stores are required to assure continuity for other users (e.g. a second sub-group). This information can be recorded and/or mapped as required in any convenient manner.

Embodiments of the present invention accommodate various data management tasks, as will now be described.

### New User Joining

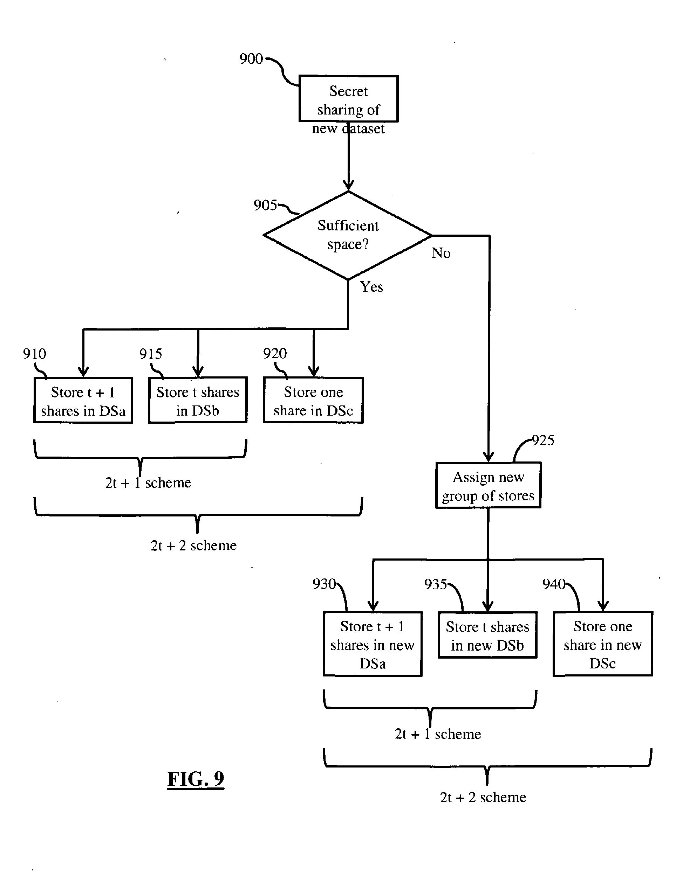

As illustrated in FIG. 9, when a new user wishes to store data in the storage network 110, the first step 900 is to carry out secret sharing of the user's dataset. The secret sharing process creates 2t + n (where n is 1 or two according to the embodiments described) shares of the dataset, t + 1 of which are to be stored in DSa, and t shares of which are to be stored in DSb, if the scheme is a 2t + 1 scheme. If the scheme is a 2t + 2 scheme, then one further share needs to be created and stored in DSc.

Next, the system establishes if a current group of stores can accommodate an additional dataset, in step 905; that is, the system establishes whether a current group of stores has stored fewer than t + 1 datasets. If, yes, and there is space for the new dataset, then t + 1 of the shares are stored in DSa, in step 910, and t shares are stored in DSb, in step 915, if the scheme is a 2t + 1 scheme. If the scheme is a 2t + 2 scheme, then the one additional share is stored in DSc, in step 920.

If, on the other hand, t + 1 datasets have already been accommodated by the present arrangement of stores, a new group of stores is assigned within the storage network 110, in step 925. The assignment would typically be implemented by the virtualisation layer 150.

Thereafter, the dataset is stored as before, whereby t + 1 of the shares are stored in the new DSa, in step 930, and t shares are stored in new DSb, in step 935, if the scheme is a 2t + 1 scheme. If the scheme is a 2t + 2 scheme, then one further share is stored in the new DSc, in step 940.

Dataset recovery and reconstruction is the opposite of dataset storage: each share is recovered from the associated shares and the shares are reconstructed into the dataset using a known cryptographic share reconstruction algorithm. Of course it is not typically necessary to recover every share, because only the threshold number is required.

### User Updates Dataset

If the user subsequently wishes to update their data, for example by changing some of the data, adding to it or removing it, according to embodiments of the invention the entire dataset needs to be reconstructed, so that the changes can be made to the data, after which the data can be secret shared again and re-stored into DSa, DSb and, if required, DSc.

The process of reconstructing the entire dataset in this way is required if the dataset is to remain as a single dataset. Alternatively, it would be possible to treat new data (or revised data) as a separate dataset for the user. However, that would reduce the number of actual users who could be accommodated by any particular group of stores.

In principle, the data updating processes could be enacted in real time, or changes could be stored and committed to the storage network at a later time. For example, it would be possible to store differences between the original data and the new data, and commit the data to the storage network at a later time (at that point enacting the requisite reconstruction, alteration and secret sharing processes).

### User Removes its Dataset

When a user wishes to remove its data from the storage network, the virtualisation layer simply un-maps or deletes the respective shares from the respective stores, leaving the freed-up space available for new users. In this context, "space" implies both storage capacity and user capacity for the associated group of stores.

Embodiments of the present invention may be enhanced with additional security features, as will now be described.

Thus far, it has been assumed that a SNP can be trusted to keep user data confidential, not attempt to subvert it and only release it for investigation by legitimate authorities. This may not always be a safe assumption. Thus, it may be desirable, in order to increase the privacy of user data, to encrypt it before transmitting the data to the storage network.

In this case, encryption could be carried out using encryption algorithms such as AES and 3DES, for example, using key sizes relative to the preferences of the users. The encryption of the data would need to be carried out by the users themselves. The users would then provide the encrypted data to a non-trusted SNP, which in turn carries out secret sharing of the data and stores the resulting shares in data stores as outlined earlier herein. The non-trusted SNP cannot break the confidentiality of the client data as the data are encrypted.

However, a problem arises when investigative authorities need access to a particular dataset that has been encrypted in this manner before being secret shared: the authorities can only reconstruct the encrypted data. According to embodiments of the invention, therefore, an additional step may be provided to facilitate investigations. The additional step involves an extra (2, 2) threshold secret sharing operation by the user on the user key that is required to decrypt the data: such that the key can be reconstructed as long as both shares are available. One share of the key is provided to the SNP by the user ― so that the SNP can hand the share to the authorities if required - and the other share of the key is kept by the user to be handed to the authorities if required. In this way, with only one share of the decryption key, the SNP is unable to reconstruct the key and misappropriate or subvert the data. Having received one share of the key from the SNP and the other share from the user, the authorities would be able to reconstruct the dataset, reconstruct the key and then decrypt the dataset using the reconstructed key.

Finally, an additional benefit of the arrangements described herein is redundancy, to cope with failures. Every user's dataset produces at least 2t + 1 shares, of which only t + 1 are required to reconstruct the dataset. Since each of these shares will typically be held in a separate storage device, this means that the framework can survive as much as t disk crashes or associated network failures, malicious or otherwise, without affecting the SNP's ability to reconstruct and return any users' data.

The above embodiments are to be understood as illustrative examples of the invention. Further embodiments of the invention are envisaged. For example, while the embodiment illustrated in FIG. 1 includes a virtualisation layer 120, this would not be essential in other embodiments. Indeed, embodiments of the invention can be implemented by any architecture that is arranged to receive a dataset, apply a threshold secret sharing scheme to the dataset to generate associated shares and distribute the shares among separate data stores according to the principles of the invention that are described herein. A virtualisation layer is only one of many different kinds of front end system that can be employed to manage this process. It is to be understood that any feature described in relation to any one embodiment may be used alone, or, if the context permits, in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A data storage method comprising:
receiving datasets to be stored in a shared storage infrastructure comprising a group of stores;
generating from each dataset, using a cryptographic threshold secret sharing scheme, a plurality of encrypted data shares, whereby a dataset can be reconstructed from a subset comprising at least a threshold number of the respective shares; and
storing the shares of each dataset across a majority of the stores in the group according to an arrangement including, for each dataset, at least one subgroup of stores that store a threshold number of respective shares and fewer than the threshold number of shares of any other dataset.

2. A method according to claim 1, in which the number of shares generated for each dataset, and the number of stores storing the shares, exceeds 65% of the number of stores in the group.

3. A method according to either preceding claim, in which the number of shares produced for each dataset, and the number of stores storing the shares, exceeds 95% of the number of stores in the group.

4. A method according to claim 1, in which the threshold secret sharing scheme and storage arrangement are mutually selected so that any dataset can be recovered from 50% of the stores, in the event the other 50% of stores becomes unavailable.

5. A method according to claim 1, in which the threshold secret sharing scheme and storage arrangement are mutually selected so that any dataset can be recovered from 33.34% of the stores, in the event the other 66.66% of the stores becomes unavailable.

6. A method according to claim 1, in which the threshold secret sharing scheme and storage arrangement are mutually selected so that providing access to stores storing up to 99.9% of any one dataset does not provide access to any other dataset.

7. A method according to claim 1, in which the threshold secret sharing scheme and storage arrangement are mutually selected so that providing access to up to 66.66% of the stores in the group, in order to reconstruct one dataset, is insufficient to enable the reconstruction of any other dataset.

8. A method according to any one of the preceding claims, wherein each share of each dataset is stored only once and each store stores no more than one share of any dataset.

9. A method according to claim 1, in which the secret sharing scheme is a (t + 1, 2t + 1) threshold secret sharing scheme and there are 2t + 1 shares produced for each dataset and 2t + 2 stores in the group, each share of each dataset being stored once and each store storing no more than one share from each dataset.

10. A method according to claim 9, wherein there are at least two subgroups of stores.

11. A method according to claim 10, wherein a first subgroup comprises t + 1 stores, in which each store stores a share of each dataset, and a second subgroup comprises t + 1 stores, in which each store stores shares of all but one of the datasets.

12. A method according to any one of claims 1 to 8, in which the secret sharing scheme is a (t + 1, 2t + 2) threshold scheme and in which there are 2t + 2 shares produced for each dataset and 3t +3 stores in the group, each share of each dataset being stored once and each store storing no more than one share from each dataset.

13. A method according to claim 12, wherein there are at least three subgroups of stores.

14. A method according to claim 13, wherein a first subgroup comprises t + 1 stores, in which each store stores a share of each dataset, and a second subgroup comprises t + 1 stores, in which each store stores shares of all but one of the datasets, and a third subgroup comprising t + 1 stores each storing one share from each dataset.

15. A computer program product comprising an electronically readable data carrier containing instructions, which when executed by a programmable processor, operate according to the method of any one of the preceding claims.

16. Storage apparatus, comprising:
an input to receive datasets to be stored on a shared storage infrastructure comprising a group of stores and an output to communicate data to the shared storage infrastructure;
a cryptographic processor to generate from each dataset to be stored, using a cryptographic threshold secret sharing scheme, a plurality of encrypted data shares, whereby a dataset can be reconstructed from a subset comprising at least a threshold number of the respective shares; and
a storage processor to distribute the shares, via the output, across a majority of the stores in the group according to an arrangement including, for each dataset,
at least one subgroup of stores that store a threshold number of respective shares and fewer than the threshold number of shares of any other dataset.

17. Storage apparatus according to claim 16, comprising a virtualisation layer, via which users can store and recover their respective datasets without knowledge of a respective underlying arrangement of stores and/or shares.

18. Storage apparatus according to either preceding claim, comprising a reconstruction processor, which is arranged to receive an instruction to recover a particular dataset and to recover sufficient shares necessary to reconstruct the respective dataset and a decryption processor, to reconstruct the dataset from the recovered shares.

19. A storage network comprising a storage apparatus according to any one of claims 16 to 18.
